# EUROPEAN PATENT APPLICATION

(11) **EP 3 876 479 A1**
(43) Date of publication of application: **08.09.2021**
(21) Application number: 20730554.1
(22) Date of filing: 12.02.2020
(51) Int. Cl.: H04L 12/26, H04L 12/24

(54) **NETWORK QUALITY DETECTION METHOD AND DEVICE**

(30) Priority: 09.01.2020 CN 202010021836
(71) Applicant: Xiamen Wangsu Co., Ltd., Xiamen, Fujian 361003 (CN)
(72) Inventor: ZHENG, Lifan, Xiamen, Fujian 361003 (CN)
(74) Representative: Würmser, Julian
(86) International application number: PCT/CN2020/074974
(87) International publication number: WO 2021/138956

(57) **Abstract**

The present disclosure discloses a method and an apparatus for detecting a network quality. The method includes: obtaining a first IP interval (201); performing a mask processing on a section D of a start IP address in the first IP interval to obtain a first IP address (202); determining a sample IP address from the first IP interval in accordance with the first IP address (203); and performing a survivability detection on the sample IP address when the number of sample IP addresses meets a preset number (204). The technical solution is used to pre-determine a relatively less number of IPs with a stable connection and a uniform distribution from a huge number of IP addresses as the IP addresses for detecting the network quality, thereby improving a detection efficiency of the network quality.

## Description

### CROSS REFERENCE TO RELATED APPLICATIONS

The present disclosure refers to Chinese patent application No.202010021836.5, entitled "Method and Apparatus for Detecting Network Quality" filed January 09, 2020, which is incorporated into the present disclosure by reference in its entirety.

### TECHNICAL FIELD

Embodiments of the present disclosure relate to the field of computer, in particular to a method and an apparatus for detecting a network quality.

### BACKGROUND

When deploying a cloud platform in a server room, a network quality from the server room to a service region is required to be obtained. For example, if the cloud platform needs to be deployed in the United States, it is necessary to apply for a host in a candidate server room in the United States. The host, as a probe, i.e., as a probe server, is used to send an Internet Control Message Protocol (ICMP) packet to an IP address of each of states, cities and operators in the United States for detecting the network, so as to obtain the network quality from the server room to each service region.

In a network quality detection, there is a huge number of IP addresses to be detected, with a long detection period and a low detection efficiency and a connectivity of each IP address might be unstable. For example, if all the IP addresses in the network cannot be detected completely within one day, it needs to be detected for two days. However, the IP address that is successfully connected on the first day might fail to be connected on the second day, thus this IP address cannot be used as the evidence for the network quality detection.

### SUMMARY

The present disclosure provides a method and an apparatus for detecting a network quality, which are used to pre-determine a relatively less number of IP addresses with a stable connection and a uniform distribution from a huge number of IP addresses as the IP addresses for detecting the network quality, thereby improving a detection efficiency of the network quality.

A method for detecting the network quality provided by an embodiment of the present disclosure includes: obtaining a first IP interval; performing a mask processing on a section D of a start IP address in the first IP interval to obtain a first IP address; determining a sample IP address from the first IP interval in accordance with the first IP address; and performing a survivability detection on the sample IP address when the number of the sample IP address meets a preset number.

In addition, performing the mask processing on the section D of the start IP address in the first IP interval to obtain the first IP address includes: performing a bitwise AND operation on the start IP address in accordance with a C-bit mask, where the bitwise AND operation is configured to change each bit of the section D in the start IP address to 0; and taking the start IP address with each bit of the section D changed to 0 as the first IP address.

In addition, determining the sample IP address from the first IP interval in accordance with the first IP address includes: adding a plurality of first preset values to a section C of the first IP address respectively to obtain a second IP address corresponding to each first preset value, where the value of the each first preset value is different; adding a second preset value to the section D of the second IP address corresponding to the each first preset value to obtain a third IP address corresponding to the each first preset value, where the section C of the third IP address corresponding to the each first preset value is the same as the section C of the second IP address corresponding to the each first preset value; and determining the third IP address that belongs to the first IP interval in the third IP addresses corresponding to the plurality of first preset values as the sample IP address.

In addition, the second preset value is equal to 1 or 254; and the sample IP address is a gateway IP address of the section C.

In addition, the method further includes determining an IP address other than the sample IP address randomly from the first IP interval as the sample IP address when the number of the sample IP address does not meet the preset number.

In addition, there are M sample IP addresses; determining the IP address other than the sample IP addresses randomly from the first IP interval as the sample IP address includes: dividing the first IP interval into M+1 second IP intervals in accordance with the M sample IP addresses; determining an IP address from any one of the M+1 second IP intervals as a M+1^{th} sample IP address; and dividing the second IP interval where the M+1^{th} sample IP address is located into two second IP intervals in accordance with the M+1^{th} sample IP address to obtain M+2 second IP intervals; and further determining an IP address from any one of the M+2 second IP intervals as a M+2^{th} sample IP address until the sample IP addresses with their quantity meeting the preset number are determined.

In addition, there are multiple first IP intervals; determining the IP address other than the sample IP address randomly from the first IP interval as the sample IP address includes: determining one IP address other than the sample IP address randomly from each first IP interval in turn as the sample IP address until the sample IP addresses with their quantity meeting the preset number are determined.

In addition, performing the survivability detection on the sample IP address includes: performing the survivability detection on each sample IP address, and determining the sample IP address that passes the survivability detection as a detection IP address, where the detection IP address is configured to detect the network quality; performing the survivability detection on the sample IP address, includes: performing a plurality of connection detections on the sample IP address; determining a packet loss rate in the connection detection when the connection with the sample IP address is successful in any connection detection; and determining that the sample IP address passes the survivability detection when it is determined that a ratio of the successful connection corresponding to the sample IP address and the packet loss rate after each successful connection meet a preset condition.

In addition, after determining the sample IP address that passes the survivability detection as the detection IP address, the method further includes: adding the detection IP address into a detection set; and performing the survivability detection on each detection IP address in the detection set, and deleting the detection IP address that fails the survivability detection from the detection set.

In the above-mentioned technical solution, the first IP interval, that is, the range of IP addresses corresponding to a service region is obtained, and a mask processing is performed on the section D of the start IP address of the first IP interval, so that the sample IP address is determined from the first IP interval in accordance with the masked start IP address. The number of the sample IP addresses is relatively less, thus shortening an entire detection period and improving the detection efficiency. Moreover, since the mask processing is performed on the section D of the start IP address, it is equivalent to that the section C of the start IP address is retained. That is, the sample IP address is determined from the first IP interval in accordance with the section C of the start IP address. The section C has a finer granularity and wider distribution than a section B and is more representative than the section D, the distribution of the sample IP address determined from the first IP interval in accordance with the section C of the start IP address is more uniform and representative, so the network quality of a huge number of the IP addresses can be represented by the network quality of a relatively less number of the sample IP addresses, that is, the network quality of the entire service region can be represented. Moreover, by performing the survivability detection on the sample IP address, the sample IP address with a more uniform distribution and a better connectivity may be found, so that these IP addresses may be detected for evaluating the network quality of the entire service region and further improving the efficiency of network quality detection of the service region.

Correspondingly, an embodiment of the present disclosure further provides an apparatus for detecting a network quality, which includes an obtaining unit configured to obtain a first IP interval; a sampling unit configured to perform a mask processing on a section D of a start IP address in the first IP interval to obtain a first IP address, and to determine a sample IP address from the first IP interval in accordance with the first IP address; and a detection unit configured to perform a survivability detection on the sample IP address when the number of the sample IP address meets a preset number.

In addition, the sampling unit is specifically configured to perform a bitwise AND operation on the start IP address in accordance with a C-bit mask, where the bitwise AND operation is configured to change each bit of the section D in the start IP address to 0. And the sampling unit is further configured to take the start IP address with each bit of the section D changed to 0 as the first IP address.

In addition, the sampling unit is specifically configured to add a plurality of first preset values to a section C of the first IP address respectively to obtain a second IP address corresponding to each first preset value, where the value of the each first preset value is different; add a second preset value to the section D of the second IP address corresponding to the each first preset value to obtain a third IP address corresponding to the each first preset value, where the section C of third IP address corresponding to the each first preset value is the same as the section C of the second IP address corresponding to the each first preset value; and determine the third IP address that belongs to the first IP interval in the third IP addresses corresponding to the plurality of first preset values as the sample IP address.

In addition, the second preset value is equal to 1 or 254; and the sample IP address is a gateway IP address of the section C.

In addition, the sampling unit is further configured to determine an IP address other than the sample IP address randomly from the first IP interval as the sample IP address when the number of the sample IP address does not meet the preset number.

In addition, there are M sample IP addresses. The sampling unit is specifically configured to divide the first IP interval into M+1 second IP intervals in accordance with the M sample IP addresses; determine an IP address from any one of the M+1 second IP intervals as a M+1^{th} sample IP address; and divide the second IP interval where the M+1^{th} sample IP address is located into two second IP intervals in accordance with the M+1^{th} sample IP address to obtain M+2 second IP intervals; and further determine an IP address from any one of the M+2 second IP intervals as a M+2^{th} sample IP address until the sample IP addresses with their quantity meeting the preset number are determined.

In addition, there are multiple first IP intervals. The sampling unit is specifically configured to determine one IP address other than the sample IP address randomly from each first IP interval in turn as the sample IP address until the sample IP addresses with their quantity meeting the preset number are determined.

In addition, the detection unit is specifically configured to perform the survivability detection on each sample IP address, and determine the sample IP address that passes the survivability detection as a detection IP address, where the detection IP address is configured to detect the network quality. The detection unit is specifically configured to perform a plurality of connection detections on the sample IP address; determine a packet loss rate in the connection detection when the connection with the sample IP address is successful in any connection detection; and determine that the sample IP address passes the survivability detection when it is determined that a ratio of the successful connection corresponding to the sample IP address and the packet loss rate after each successful connection meet a preset condition.

In addition, the detection unit is further configured to, after determining the sample IP address that passes the survivability detection as the detection IP address, add the detection IP address into a detection set; and then perform the survivability detection on each of the detection IP address in the detection set, and delete the detection IP address that fails the survivability detection from the detection set.

Correspondingly, an embodiment of the present disclosure further provides a computing device, including: a memory configured to store a program instruction; and a processor configured to invoke the program instruction stored in the memory and implement the above-described method for detecting a network quality in accordance with an obtained program.

Correspondingly, an embodiment of the present disclosure further provides a computer-readable non-volatile storage medium, including a computer-readable instruction; when read and executed by a processor, the computer-readable instruction causes the processor to implement the above-described method for detecting a network quality.

### BRIEF DESCRIPTION OF THE DRAWINGS

In order to describe the technical solutions of the embodiments of the present disclosure more clearly, the drawings used in the description of the embodiments are briefly described below. It is obvious that the drawings descripted below are only some embodiments of the present disclosure. For those skilled in the art, further drawings may be obtained in accordance with these drawings without any creative effort.
FIG. 1 is a schematic diagram of a system architecture provided by an embodiment of the present disclosure;
FIG. 2 is a schematic flowchart of a method for detecting a network quality provided by an embodiment of the present disclosure;
FIG. 3 is a schematic diagram of dividing a first IP interval provided by an embodiment of the present disclosure;
FIG. 4 is a schematic diagram of dividing a plurality of first IP intervals provided by an embodiment of the present disclosure;
FIG. 5 is a schematic structural diagram of an apparatus for detecting a network quality provided by an embodiment of the present disclosure.

### DETAILED DESCRIPTION

In order to make the objective, the technical solution and the advantages of the present disclosure clearer, embodiments of the present disclosure are further illustrated below in detail with reference to the accompanying drawings. It is obvious that the described embodiments are only part of the embodiments of the present disclosure, rather than all of them. Based on the embodiments in the present disclosure, all other embodiments obtained by those skilled in the art without creative efforts shall fall within the protection scope of the present disclosure.

In order to better explain the embodiments of the present disclosure, a service scenario applicable to the embodiments of the present disclosure is specifically described as follows: When deploying a cloud platform in a server room, a network quality from the server room to a service region is required to be obtained. For example, if the cloud platform needs to be deployed in the United States, it is necessary to apply for a host in a candidate server room in the United States. The host, as a probe, i.e., as a probe server, is used to send an Internet Control Message Protocol (ICMP) packet to an IP address of each of states, cities and operators in the United States for detecting the network, so as to obtain the network quality from the server room to each service region. Correspondingly, the server room with a better network quality to each service region may be determined for deploying the cloud platform.

When the probe server detects the network quality of the service region, in order to prevent the probe server from detecting all the IP addresses of the service region, the IP address with a stable network connection and a uniform distribution needs to be collected from all the IP addresses of the service region as a detection IP address, so that the probe server detects the detection IP address to determine the network quality of the service region.

The embodiments of the present disclosure relate to an IP address library with a global scope. A plurality of IP address segments are recorded in the IP address library and each IP address segment corresponds to a start IP address and an end IP address. The IP address segment may be further regard as an IP range, an IP interval and the like. For example, if the IP address segment is 180.160.0.0-180.175.255.255, the start IP address is 180.160.0.0 and the end IP address is 180.175.255.255. Each IP address in the IP address library corresponds to a country field, a state (province/city) field, a city field (if it is a small country, the city information is directly stored in the state field, and then the city field and the state field are consistent) and an operator field. The plurality of IP address segments in the IP address library may be grouped in accordance with the country field, the state field, the city field and the operator field to finally determine that each group corresponds to the plurality of the IP address segments.

When determining to detect a certain service region, it may be to determine the group corresponding to the service region, and then further determine a plurality of sample IP addresses from the plurality of IP address segments of the group, and further determine the detection IP address from the plurality of sample IP addresses to detect the network quality of the service region.

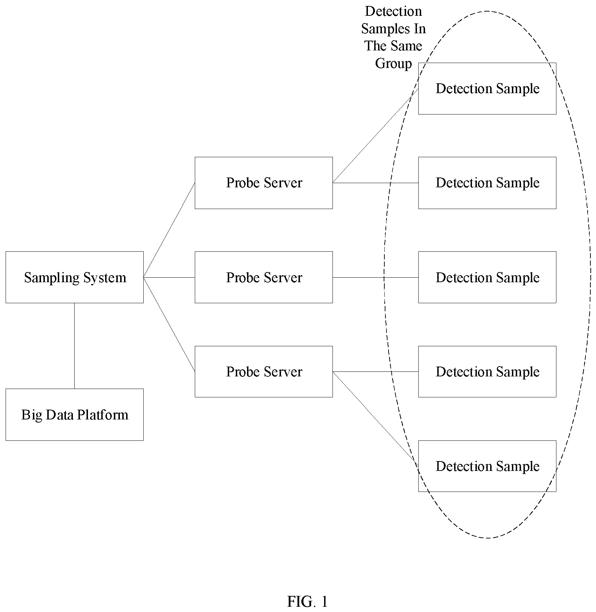

FIG. 1 exemplarily shows a system architecture applicable to a method for detecting a network quality provided by an embodiment of the present disclosure, which may include a big data platform, a sampling system, and a probe server;

The sampling system is configured to determine a plurality of sample IP addresses from a plurality of IP address segments of a service region. The probe server continuously performs a survivability test on the sample IP addresses and reports a test result data of each sample IP address to the big data platform. The big data platform determines a detection IP address from the sample IP addresses in accordance with the test result data reported by the probe server, and adds the detection IP address to a detection set. The probe server detects the detection IP addresses in the detection set to detect the network quality of the service region. Here, the survivability test refers to testing the connectivity and connection stability of the sample IP address.

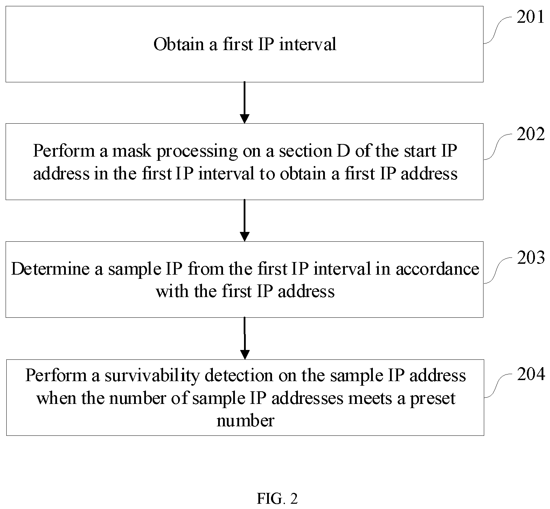

Based on the forgoing description, FIG. 2 exemplarily shows a flow of a method for detecting a network quality provided by an embodiment of the present disclosure, which may be executed by an apparatus for detecting the network quality.

As shown in FIG. 2, the flow specifically includes:

In step 201, a first IP interval is obtained.

It is equivalent to obtaining an IP interval in a current group. The first IP interval is from a start IP address to an end IP address, and the first IP interval includes N consecutive IP addresses.

In step 202, a mask processing is performed on a section D of the start IP address in the first IP interval to obtain a first IP address.

In the embodiment of the present disclosure, the start IP address is converted into a numeric type, which includes a section A, a section B, a section C and a section D, and each section ranges from 0 to 255, totaling 256. In the computer field, one bit may represent two values of 0 or 1, and one byte is 8 bits, so the one byte may just store the numeric value of one section. Therefore, an unsigned integer of 4 bytes is used to represent an IP address. For example, if the start IP address is 8.8.8.8, corresponding to the section A, the section B, the section C and the section D of the IP address respectively, the start IP address may be converted into a binary format of 00001000 00001000 00001000 00001000.

In an implementation, a bitwise AND operation may be performed on the start IP address in accordance with a C-bit mask, and the bitwise AND operation is configured to change each bit of the section D in the start IP address to 0, thereby taking the start IP address with each bit of the section D changed to 0 as the first IP address. The C-bit mask is 11111111 11111111 11111111 00000000.

Continuing with the forgoing example, the bitwise AND operation is performed on the start IP address in accordance with the C-bit mask. If the bit values of the start IP address and the C-bit mask are both 1, then 1 is output, and if one of the bit values of the start IP address and the C-bit mask is 0, then 0 is output. The first IP address after performing the mask processing on the section D may be obtained, as follows:

| | Section A | Section B | Section C | Section D |
|---|---|---|---|---|
| Start IP address | 11111111 | 11111111 | 11111111 | 00000000 |
| C-bit mask | 00001000 | 00001000 | 00001000 | 00001000 |
| First IP address | 00001000 | 00001000 | 00001000 | 00000000 |

In step 203, a sample IP address is determined from the first IP interval in accordance with the first IP address.

After determining the first IP address, the sample IP address with a relatively uniform distribution may be determined from the first IP interval in accordance with the first IP address. In one implementation, a plurality of first preset values may be added to the section C of the first IP address respectively to obtain a second IP address corresponding to each first preset value. Here the value of each first preset value may be different, which is interpreted as that the plurality of first preset values may take 0, 1, 2, 3 ... in turn. For example, when the first preset value is 0, its corresponding second IP address is determined; when the first preset value is 1, its corresponding second IP address is determined; when the first preset value is 2, its corresponding second IP address is determined... After determining the second IP address corresponding to each first preset value, a second preset value is added to the section D of the second IP address corresponding to each first preset value to obtain a third IP address corresponding to each first preset value. Here, the section C of the third IP address corresponding to each first preset value is the same as the section C of the second IP address, that is, when adding the second preset value to the section D of the second IP address corresponding to each first preset value, the second preset value is not greater than 256, so as to ensure that 1 is not added to the section C of the second IP address.

In another implementation, the second preset value may be added to the section D of the first IP address. Here, the section C of the first IP address after adding the second preset value to the section D remains unchanged. Then the plurality of the first preset values are added to the section C of the first IP address after adding the second preset value to the section D, and the plurality of first preset values may still take 0, 1, 2, 3 ... in turn to respectively obtain a plurality of IP addresses with changed section C.

That is, in the embodiment of the present disclosure, after obtaining the first IP address, it is not only possible to add the second preset value to the section D of the first IP address, and then add the plurality of first preset values to the section C respectively, but also possible to add the plurality of first preset values to the section C of the first IP address respectively, and then add the second preset value to the section D.

After determining a plurality of third IP addresses, the third IP address belonging to the first IP interval may be determined from the plurality of third IP addresses, and the determined third IP address may be determined as the sample IP address.

In the embodiment of the present disclosure, the sample IP address may be set as a gateway IP address of the section C, that is, the obtained third IP address is the gateway IP address of the section C. Correspondingly, the second preset value may be equal to 1 or 254. The gateway IP address of the section C is set because the section C has a finer granularity and a wide distribution. It is certain that, in some scenarios, the second preset value may also take other values, such as 128, 64 and the like, and at this time, the sample IP address may not be a gateway IP address. In addition, in some scenarios, the sample IP address may also be the gateway IP address of the section B.

Continuing with the forgoing example, if the first IP address is 8.8.8.0, there are the following cases:

If the first preset value is 0 and the second preset value is 1, then the section C of the first IP address is unchanged, 1 is added to the section D and the obtained third IP address is 8.8.8.1. Whether the 8.8.8.1 is within the first IP interval is determined. If so, the 8.8.8.1 is determined as the sample IP address.

If the first preset value is 0 and the second preset value is 254, then the section C of the first IP address is unchanged, 254 is added to the section D and the obtained third IP address is 8.8.8.254. Whether the 8.8.8.254 is within the first IP interval is determined. If so, the 8.8.8.254 is determined as the sample IP address.

If the first preset value is 1 and the second preset value is 1, then 1 is added to the section C of the first IP address, 1 is added to the section D and the obtained third IP address is 8.8.9.1. Whether the 8.8.9.1 is within the first IP interval is determined. If so, the 8.8.9.1 is determined as the sample IP address.

If the first preset value is 1 and the second preset value is 254, then 1 is added to the section C of the first IP address, 254 is added to the section D and the obtained third IP address is 8.8.9.254. Whether the 8.8.9.254 is within the first IP interval is determined. If so, the 8.8.9.254 is determined as the sample IP address.

The above-described process is repeated until all the gateway IP addresses of the sections C in the first IP interval is determined.

In the forgoing embodiment, after obtaining the first IP address, 1 and 254 may be added to the section D of the first IP address to obtain two third IP addresses. Then 256 is further added to the section D of the first IP address, so that the section C of the first IP address adds 1, and then add 1 and 254 to the section D of the first IP address after adding 1 to the section C to obtain two third IP addresses,..., until all the gateway IP address of the sections C in the first IP interval is determined.

Continuing with the forgoing example, if the first IP address is 8.8.8.0, there are the following cases:

By adding 1 to the section D of the 8.8.8.0, the third IP address is obtained as 8.8.8.1, and Whether the 8.8.8.1 is within the first IP interval is determined. By adding 254 to the section D of the 8.8.8.0, the third IP address is obtained as 8.8.8. 254, and Whether the 8.8.8. 254 is within the first IP interval is determined.

After adding 256 to the section D of the 8.8.8.0, the obtained IP address is 8.8.9.0, and further adding 1 to the section D of the 8.8.9.0, 8.8.9.1 is obtained. Whether the 8.8.9.1 is within the first IP interval is determined. Adding 254 to the section D of the 8.8.9.0, 8.8.9.254 is obtained, and Whether the 8.8.9.254 is within the first IP interval is determined.

After adding 256 to the section D of the 8.8.9.0, the obtained IP address is 8.8.10.0, and further adding 1 to the section D of the 8.8.10.0, 8.8.10.1 is obtained. Whether the 8.8.10.1 is within the first IP interval is determined. By adding 254 to the section D of the 8.8.10.0, 8.8.10.254 is obtained, and Whether the 8.8.10.254 is within the first IP interval is determined.

The above-described process is repeated until all the gateway IP addresses of the sections C in the first IP interval is determined.

In step 204, when the number of the sample IP addresses meets a preset number, a survivability detection is performed on the sample IP address.

After determining a plurality of sample IP addresses, whether the number of the sample IP addresses meets the preset number is first determined, and if so, the survivability detection is performed on the obtained sample IP addresses, otherwise, it is necessary to further determine the sample IP addresses until the number of the sample IP addresses meets the preset number, and then the survivability detection is performed on the obtained sample IP addresses.

In the embodiment of the present disclosure, if the number of the sample IP addresses may not meet the preset number, an IP address other than the previously determined sample IP address needs to be randomly determined from the first IP interval as the sample IP address. Assuming that the number of the determined sample IP addresses is M, the first IP interval may be divided into M+1 second IP intervals in accordance with the M sample IP addresses. One IP address is determined from any one of the M+1 second IP intervals as the M+1^{th} sample IP address. Then, in accordance with the M+1^{th} sample IP address, the second IP interval where the M+1^{th} sample IP address is located is divided into two second IP intervals to obtain M+2 second IP intervals. Furthermore, one IP address is determined from any one of the M+2 second IP intervals as the M+2^{th} sample IP address until the sample IP addresses with their quantity meeting the preset number are determined.

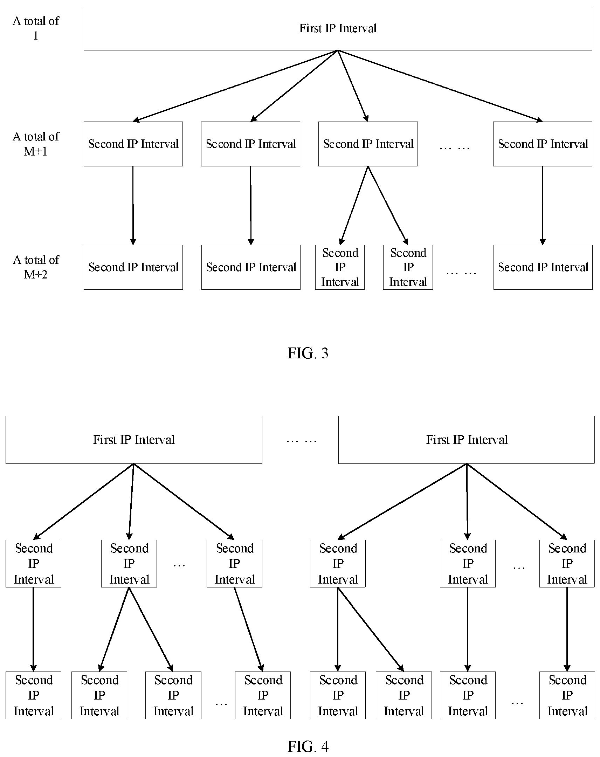

It is explained that after the number of the sample IP addresses determined in steps 201 to 203 do not meet the preset number, it is necessary to randomly determine a portion of the IP addresses from the remaining IP addresses as the sample IP addresses. In order to ensure the uniformity of the re-determined sample IP addresses, in accordance with the M sample IP addresses determined in steps 201 to 203, the first IP interval may be divided into M+1 second IP intervals, i.e., sub-intervals of the first IP interval as shown in FIG. 3. Then one IP address in the second IP interval is randomly taken out from the M+1 second IP intervals as the sample IP address, and the second IP interval where the randomly determined IP address is located is divided into two second IP intervals to obtain M+2 second IP interval. Through this cyclic process, the sample IP addresses with their quantity meeting the preset number are finally obtained. Here, it should be noted that when the IP address in the second IP interval is randomly taken out from the M+1 second IP intervals as the sample IP address, the last IP address or the first IP address in a second IP interval may be taken out as the sample IP address. At this time, it is still M+1 second IP intervals, and then another IP address is randomly taken out from the M+1 second IP intervals as the sample IP address again until the preset number of the sample IP addresses is finally obtained.

When the M+1^{th} sample IP address is randomly determined in the M+1 second IP interval, in one implementation, it may randomly determine an integer greater than or equal to 0 and less than M+1, and determine the corresponding second IP interval in accordance with the integer. Then another IP address is randomly determined from the corresponding second IP interval. In another implementation, it may count a total number of all the IP addresses in the M+1 second IP intervals, and randomly determine an integer greater than or equal to 0 and less than the total number, and one IP address is determined from all the IP addresses in accordance with the integer.

In an embodiment of the present disclosure, a current group may include a plurality of first IP intervals. In order to further ensure the uniformity of sample IP addresses, one IP address may be randomly selected in turn as the sample IP address from a plurality of second IP intervals corresponding to each first IP interval, and the corresponding second IP interval may be further divided into two IP intervals in accordance with the selected IP address, which is equivalent to randomly selecting one IP address from the first first IP interval as the sample IP address and dividing the corresponding second IP interval into two second IP intervals in accordance with the selected IP address. Then, one IP address is randomly selected from the second first IP interval as the sample IP address, and the corresponding second IP interval is divided into two second IP intervals in accordance with the selected IP address, and the forgoing process is circulated to finally obtain the sample IP addresses with their quantity meeting the preset number, as shown in FIG. 4. Through the above-described way, after randomly selecting one IP address from one first IP interval, switching to another first IP interval and polling for the IP addresses in all the first IP intervals are selected, thus ensuring that if one of the first IP intervals is particularly short, the IP address may still be selected as the sample IP address from other first IP intervals after this first IP interval is exhausted.

When performing a survivability detection on the sample IP address, it may be that a sampling system distributes the sample IP address to a probe server, so that the probe server performs the survivability detection on the sample IP address, and the probe server uploads a detected data to a sampling server. In a specific detection, the survivability detection may be performed on each sample IP address, and the sample IP address that passes the survivability detection is determined as a detection IP address, and the detection IP address is used to detect a network quality.

In an embodiment of the present disclosure, a plurality times of connection detection may be performed on a sample IP address, and each connection detection may or may not be connected, so it is necessary to count the number of all the connections of the sample IP address to determine a ratio of a successful connection corresponding to the sample IP address, and to determine a packet loss rate in the connection detection each time when the connection is successful. Further, if it is determined that the ratio of the successful connection corresponding to the sample IP address and the packet loss rate after each time when the connection is successful meet a preset condition, it is determined that the sample IP address passes the survivability detection. In a specific implementation, the sample IP address meeting the preset condition is obtained from a plurality of sample IP addresses to be as a detection IP address. The preset conditions are that a connection rate (the number of times that may be connected ÷the total number of times of detection × 100%) >80%, and from the connected response values, averaging the accumulated packet loss rate of each time, the average packet loss rate is less than 80%, and the IP address includes a country field, a state (province/city) field, a city field and an operator field.

After performing the survivability detection on a plurality of sample IP addresses, the sample IP address that passes the survivability detection is determined as the detection IP address, and the detection IP address is added to a detection set. In order to maintain the survivability of all the detection IP addresses in the detection set, it is also necessary to continuously perform the survivability detection on each of the detection IP addresses in the detection set, and delete the detection IP address that fails to pass the survivability detection from the detection set.

In an implementation, the survivability detection is performed on the determined sample IP address in each detection period, and the sample IP address that passes the survivability detection is added as the detection IP address to the detection set. Moreover, the survivability detection is performed on the detection IP address in the detection set, and the detection IP address that fails to pass the survivability detection is deleted from the detection set. In this way, it may ensure that the detection IP addresses in the detection set have a good connectivity. Further, in the embodiment of the present disclosure, it is set that the IP address previously added to the detection set may not be used as the sample IP address again, thus improving the accuracy of network quality detection on the premise of ensuring the good connection of the detection IP address. For example, the detection period is one day. On the first day, 5000 sample IP addresses are determined, and then the survivability detection are performed on the 5000 sample IP addresses and 2,000 detection IP addresses are determined to be used for evaluating a network quality of a service region. Then, on the second day, 3,000 sample IP addresses are continuously determined from all the IP addresses (all the IP addresses except the 2,000 detection IP addresses) of the service region. In combination with the 2,000 detection IP address on the first day, a total of 5,000 sample IP addresses are formed, and the survivability detection are performed on the 5,000 sample IP address. If 2,300 IP address passing the survivability detection (1,800 detection IP addresses passing the survivability detection in the 2,000 detection IP addresses on the first day and 500 detection IP addresses passing the survivability detection in the 3,000 sample IP addresses on the second day, totaling 2,300) are determined, the 2,300 IP addresses passing the survivability detection are added to the detection set as the detection IP address for evaluating the network quality of the service region. By analogy, the sample IP addresses are determined from all the IP addresses in the service region (except the IP address that has been determined as the detection IP address) every day, and combined with the detection IP addresses of the previous day, all the sample IP addresses of the same day will be formed to perform the survivability detection, thereby determining the sample IP addresses passing survivability detection to be added to the detection set as the detection IP address for evaluating the network quality of the service region.

Based on the forgoing description, there are actually two times of IP address detection in the embodiments of the present disclosure. The first IP address detection is to detect the survivability of the sample IP address after determining the sample IP address, and determine the sample IP address passing the survivability test as the detection IP address. The second IP address detection is to determine the connectivity of the detection IP address after determining the detection IP address, and determine the network quality of the service region based on the connectivity of the detection IP address. That is, the first IP address detection is used to find uniformly distributed and stably connected IP addresses from the service region as the detection IP addresses, so that during the second IP address detection, the network quality of the service region may be detected based on these uniformly distributed and stably connected IP addresses. The network quality of the service region may be effectively detected in this way, and the detection efficiency is high.

In the specific implementations of the present disclosure, two types of probe servers will also be deployed. The first type is the probe server deployed by cloud platform providers in the business scenarios, which may be deployed at home and abroad, and all the sample IP addresses may be distributed to the first type of the probe servers for determining the detection IP address with the stable connection. The second type is the probe server deployed by users in the service scenarios, which may also be deployed at home and abroad. After determining the detection IP address, the second type of probe servers may be used to detect the detection IP address in the service region and further determine the network quality of the service region. In addition, when the second type of probe servers determine the network quality of the service region, the network quality of the second type of probe servers may be known correspondingly. That is, the second type of probe servers may know their own network quality correspondingly when detecting the detection IP address. In this way, it is determined that when the second type of probe servers are deployed in which server room, the network quality of the second type of probe servers is considered good, thereby determining which server room or rooms to be used for deploying a cloud platform.

For example, if a cloud platform is to be deployed to serve customers in the United States, then the server rooms in four cities: New York, Los Angeles, Houston and Chicago in the United States may be deployed. The numbering of the server rooms deployed is shown in Table 1.

**Table 1**

| Numbering of server room | |
|---|---|
| New York-a | Server Room a of New York |
| New York-b | Server Room b of New York |
| New York-c | Server Room c of New York |
| New York-d | Server Room d of New York |
| Los Angeles-a | Server Room a of Los Angeles |
| Los Angeles-b | Server Room b of Los Angeles |
| Houston-a | Server Room a of Houston |
| Chicago-a | Server Room a of Chicago |
| Chicago-b | Server Room b of Chicago |

Since the operators to which each network line belongs are different, the operators used in deploying the probe servers in each server room are also different. Specifically, the numbering of deployed probe servers may be shown in Table 2.

**Table 2**

| Numbering of probe server | |
|---|---|
| New York-a-ATT | Server Room a of New York, the operator is ATT |
| New York-a-Verizon | Server Room a of New York, the operator is Verizon |
| New York-b-ATT | Server Room b of New York, the operator is ATT |
| New York-b-Verizon | Server Room b of New York, the operator is Verizon |
| New York-c-ATT | Server Room c of New York, the operator is ATT |
| New York-c-Verizon | Server Room c of New York, the operator is Verizon |
| New York-d-ATT | Server Room d of New York, the operator is ATT |
| New York-d-Verizon | Server Room d of New York, the operator is Verizon |
| Los Angeles-a-ATT | Server Room a of Los Angeles, the operator is TT |
| Los Angeles-a-Verizon | Server Room a of Los Angeles, the operator is Verizon |
| Los Angeles-b-ATT | Server room b of Los Angeles, the operator is ATT |
| Los Angeles-b-Verizon | Server Room b of Los Angeles, the operator is Verizon |
| Houston-a-ATT | Server Room a of Houston, the operator is ATT |
| Houston-a-Verizon | Server Room a of Houston, the operator is Verizon |
| Chicago-a-ATT | Server Room a of Chicago, the operator is ATT |
| Chicago-a-Verizon | Server Room a of Chicago, the operator is Verizon |
| Chicago-b-ATT | Server Room b of Chicago, the operator is ATT |
| Chicago-b-Verizon | Server Room b of Chicago, the operator is Verizon |

The detection IP address in the IP address group under a certain service region may be selected. Taking the probe server "Chicago-a-Verizon" as an example, the probe server "Chicago-A-Verizon" is used to detect the connectivity of the all detection IP addresses so as to determine the network quality of the service region. Correspondingly, the network quality of the probe server "Chicago-a-Verizon" to the service region may be obtained. Through the forgoing method, the network quality of all the probe servers to the service region may be obtained, and then further finding out which probe servers in the server rooms of each city in the United States have good network quality, that is, which server room in which city may the cloud platform be deployed.

In the embodiments of the present disclosure, the first IP interval, that is, the range of IP addresses corresponding to a service region is obtained, and a mask processing is performed on the section D of the start IP address of the first IP interval, so that the sample IP address is determined from the first IP interval in accordance with the masked start IP address. The number of the sample IP addresses is relatively less, which may shorten an entire detection period and improve the detection efficiency. Moreover, since a mask processing is performed on the section D of the start IP address, it is equivalent to that the section C of the start IP address is retained, that is, the sample IP address is determined from the first IP interval in accordance with the section C of the start IP address. Since the section C has a finer granularity and wider distribution than a section B and is more representative than the section D, the distribution of the sample IP addresses determined from the first IP interval in accordance with the section C of the start IP address is more uniform and representative, so the network quality of a huge number of the IP addresses may be represented by the network quality of a small number of the sample IP addresses, that is, the network quality of the entire service region may be represented. Moreover, by performing the survivability detection on the sample IP address, the sample IP address with a more uniform distribution and a better connectivity may be found out, so that these IP addresses may be detected for evaluating the network quality of the entire service region and further improving the efficiency of network quality detection of the service region.

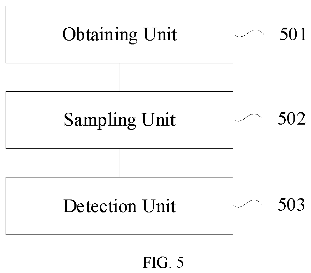

Based on the same inventive concept, FIG. 5 exemplarily shows a structure of an apparatus for detecting a network quality provided by an embodiment of the present disclosure, and the apparatus may execute a flow of a method for detecting the network quality.

The apparatus includes: an obtaining unit 501 configured to obtain a first IP interval; a sampling unit 502 configured to perform a mask processing on a section D of a start IP address in the first IP interval to obtain a first IP address; and to determine a sample IP address from the first IP interval in accordance with the first IP address; and a detection unit 503 configured to perform a survivability detection on the sample IP address when the number of the sample IP addresses meets a preset number.

Exemplarily, the sampling unit 502 is configured to perform a bitwise AND operation on the start IP address in accordance with a C-bit mask, where the bitwise AND operation is configured to change the section D in the start IP address to 0; and take the start IP address with the section D changed to 0 as the first IP address.

Exemplarily, the sampling unit 502 is configured to add a plurality of first preset values to a section C of the first IP address respectively to obtain a second IP address corresponding to each first preset value, where the value of the each first preset value is different; add a second preset value to the section D of the second IP address corresponding to the each first preset value to obtain a third IP address corresponding to the each first preset value, where the third IP address corresponding to the each first preset value is the same as the section C of the second IP address; and determine the third IP address that belongs to the first IP interval in the third IP addresses corresponding to the plurality of first preset values as the sample IP address.

Exemplarily, the second preset value is equal to 1 or 254; and the sample IP address is a gateway IP address of the section C.

Exemplarily, the sampling unit 502 is further configured to determine an IP address other than the sample IP address randomly from the first IP interval as the sample IP address when the number of the sample IP address does not meet the preset number.

Exemplarily, there are M sample IP addresses. The sampling unit 502 is specifically configured to divide the first IP interval into M+1 second IP intervals in accordance with the M sample IP addresses; determine an IP address from any one of the M+1 second IP intervals as a M+1^{th} sample IP address; and divide the second IP interval where the M+1^{th} sample IP address is located into two second IP intervals in accordance with the M+1^{th} sample IP address to obtain M+2 second IP intervals; and further determine an IP address from any one of the M+2 second IP intervals as a M+2^{th} sample IP address until the sample IP addresses with their quantity meeting the preset number are determined.

Exemplarily, there are multiple first IP intervals. The sampling unit 502 is specifically configured to determine one IP address other than the sample IP address randomly from each first IP interval in turn as the sample IP address until the sample IP addresses with their quantity meeting the preset number are determined.

Exemplarily, the detection unit 503 is specifically configured to perform the survivability detection on each sample IP address, and determine the sample IP address that passes the survivability detection as a detection IP address, where the detection IP address is configured to detect the network quality. The detection unit 503 is specifically configured to perform a plurality of connection detections on the sample IP address; determine a packet loss rate in the connection detection when the connection with the sample IP address is successful in any connection detection; and determine that the sample IP address passes the survivability detection when it is determined that a ratio of the successful connection corresponding to the sample IP address and the packet loss rate after each successful connection meet a preset condition.

Exemplarily, the detection unit 503 is further configured to, after determining the sample IP address that passes the survivability detection as the detection IP address, add the detection IP address into a detection set; and perform the survivability detection on each of the detection IP address in the detection set, and delete the detection IP address that fails the survivability detection from the detection set.

Based on the same inventive concept, an embodiment of the present disclosure further provides a computing device, including: a memory configured to store a program instruction; and a processor configured to invoke the program instruction stored in the memory and implement the above-described method for detecting a network quality in accordance with an obtained program.

Based on the same inventive concept, an embodiment of the present disclosure further provides a computer-readable non-volatile storage medium, including a computer-readable instruction, read and executed by a processor, causes the processor to implement the above-described method for detecting a network quality.

The present disclosure is described with reference to flowcharts and/or block diagrams of a method, an apparatus (system), and a computer program product in accordance with embodiments of the present disclosure. It should be appreciated that each flow and/or block in the flowcharts and/or block diagrams, and a combination of the flow and/or the block in the flowcharts and/or the block diagrams may be implemented by a computer program instruction. These computer program instructions may be provided to a processor of a general-purpose computer, a dedicated computer, an embedded processor, or other programmable data processing device to produce a machine, causing the instructions executed by the processor of the computer or the other programmable data processing device to produce an apparatus for implementing a function specified in one or more flows of the flowcharts and/or one or more blocks of the block diagrams.

These computer program instructions may also be stored in a computer-readable memory capable of directing the computer or the other programmable data processing device to work in a specific manner, causing the instructions stored in the computer-readable memory to produce an article of manufacture including an instruction apparatus, and the instruction apparatus implements the function specified in one or more flows of the flowcharts and/or one or more blocks of the block diagrams.

These computer program instructions may also be loaded onto the computer or the other programmable data processing device, causing a series of operational steps to be performed on the computer or the other programmable device to produce a computer implemented process, such that the instructions executed on the computer or the other programmable device provide steps for implementing the function specified in one or more flows of the flowcharts and/or one or more blocks of the block diagrams.

Although the preferred embodiments of the present disclosure have been described, those skilled in the art may make additional changes and modifications to these embodiments once they know the basic inventive concepts. Therefore, the appended claims are intended to be interpreted as including the preferred embodiments and all changes and modifications that fall within the scope of the present disclosure.

It is obvious that various modifications and variations may be made to the present disclosure by those skilled in the art without departing from the spirit and scope of the present disclosure. Thus, if these modifications and variations of the present disclosure fall within the scope of the claims of the present disclosure and their equivalent technologies, the present disclosure also intends to include these modifications and variations.

## Claims

1. A method for detecting a network quality, comprising:
obtaining a first IP interval;
performing a mask processing on a section D of a start IP address in the first IP interval to obtain a first IP address;
determining a sample IP address from the first IP interval in accordance with the first IP address; and
performing a survivability detection on the sample IP address when the number of sample IP addresses meets a preset number.

2. The method of claim 1, wherein performing the mask processing on the section D of the start IP address in the first IP interval to obtain the first IP address comprises:
performing a bitwise AND operation on the start IP address in accordance with a C-bit mask, wherein the bitwise AND operation is configured to change each bit of the section D in the start IP address to 0; and
taking the start IP address with each bit of the section D changed to 0 as the first IP address.

3. The method of claim 2, wherein determining the sample IP address from the first IP interval in accordance with the first IP address comprises:
adding a plurality of first preset values to a section C of the first IP address respectively to obtain a second IP address corresponding to each first preset value, wherein the value of the each first preset value is different;
adding a second preset value to the section D of the second IP address corresponding to the each first preset value to obtain a third IP address corresponding to the each first preset value, wherein the third IP address corresponding to the each first preset value is the same as the section C of the second IP address; and
determining the third IP address belonging to the first IP interval in third IP addresses corresponding to the plurality of first preset values as the sample IP address.

4. The method of claim 3, wherein the second preset value is equal to 1 or 254; and the sample IP address is a gateway IP address of the section C.

5. The method of claim 1, wherein the method further comprises:
determining an IP address other than the sample IP address randomly from the first IP interval as the sample IP address when the number of the sample IP address does not meet the preset number.

6. The method of claim 5, wherein the number of the sample IP address is M; determining the IP address other than the sample IP address randomly from the first IP interval as the sample IP address comprises:
dividing the first IP interval into M+1 second IP intervals in accordance with M sample IP addresses;
determining an IP address from any one of the M+1 second IP intervals as a M+1^{th} sample IP address; and
dividing the second IP interval where the M+1^{th} sample IP address is located into two second IP intervals in accordance with the M+1^{th} sample IP address to obtain M+2 second IP intervals; and further determining an IP address from any one of the M+2 second IP intervals as a M+2^{th} sample IP address until the sample IP addresses with their quantity meeting the preset number are determined.

7. The method of claim 5, wherein there are multiple first IP intervals;
determining the IP address other than the sample IP address randomly from the first IP interval as the sample IP address comprises:
determining one IP address other than the sample IP address randomly from each first IP interval in turn as the sample IP address until the sample IP addresses with their quantity meeting the preset number are determined.

8. The method of claim 1, wherein performing the survivability detection on the sample IP address comprises:
performing the survivability detection on each sample IP address, and determining the sample IP address that passes the survivability detection as a detection IP address, wherein the detection IP address is configured to detect the network quality;
performing the survivability detection on the sample IP address, comprising:
performing a plurality of connection detections on the sample IP address; determining a packet loss rate in the connection detection when the connection with the sample IP address is successful in any connection detection; and
determining that the sample IP address passes the survivability detection when it is determined that a ratio of the successful connection corresponding to the sample IP address and the packet loss rate after each successful connection meet a preset condition.

9. The method of claim 8, wherein after determining the sample IP address that passes the survivability detection as the detection IP address, the method further comprises:
adding the detection IP address into a detection set; and
performing the survivability detection on each detection IP address in the detection set, and deleting the detection IP address that fails the survivability detection from the detection set.

10. An apparatus for detecting a network quality, comprising:
an obtaining unit, configured to obtain a first IP interval;
a sampling unit, configured to perform a mask processing on a section D of a start IP address in the first IP interval to obtain a first IP address; and to determine a sample IP address from the first IP interval in accordance with the first IP address; and
a detection unit, configured to perform a survivability detection on the sample IP address when the number of the sample IP address meets a preset number.

11. A computing device, comprising:
a memory, configured to store a program instruction; and
a processor, configured to invoke the program instruction stored in the memory and implement the method of any one of claims 1 to 9 in accordance with an obtained program.

12. A computer-readable non-volatile storage medium, comprising a computer-readable instruction, wherein the computer-readable instruction, when read and executed by a processor, causes the processor to implement the method of any one of claims 1 to 9.
